(19)

Europäisches Patentamt
European Patent Office
Office européen des brevets

(11) **EP 3 984 631 A1**

(12) **EUROPEAN PATENT APPLICATION**
published in accordance with Art. 153(4) EPC

(43) Date of publication:
**20.04.2022 Bulletin 2022/16**

(21) Application number: **20901028.9**

(22) Date of filing: **17.12.2020**

(51) International Patent Classification (IPC):
**B01J 19/18** (2006.01)     **B01J 19/00** (2006.01)
**C01G 53/00** (2006.01)

(52) Cooperative Patent Classification (CPC):
**B01J 19/00; B01J 19/18; C01G 53/00**

(86) International application number:
**PCT/KR2020/018583**

(87) International publication number:
**WO 2021/125848 (24.06.2021 Gazette 2021/25)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **20.12.2019 KR 20190172016**

(71) Applicant: **LG Chem, Ltd.**
**Seoul 07336 (KR)**

(72) Inventors:
• **LEE, Eun Hee**
 **Daejeon 34122 (KR)**
• **HWANG, Byung Hyun**
 **Daejeon 34122 (KR)**
• **HONG, Won Taek**
 **Daejeon 34122 (KR)**
• **PARK, Young Su**
 **Daejeon 34122 (KR)**

(74) Representative: **Hoffmann Eitle**
**Patent- und Rechtsanwälte PartmbB**
**Arabellastraße 30**
**81925 München (DE)**

(54) **POSITIVE ELECTRODE ACTIVE MATERIAL PRECURSOR, AND PREPARATION METHOD AND PREPARATION APPARATUS THEREOF**

(57) The present invention relates to a manufacturing apparatus of a precursor for positive electrode active material and a manufacturing method of a precursor for positive electrode active material using the manufacturing apparatus, wherein the manufacturing apparatus includes a reactor configured to receive a reaction solution and produce a precursor for positive electrode active material through a co-precipitation reaction of the reaction solution, a filtration unit disposed inside the reactor and configured to discharge a filtrate excluding solids in the reaction solution to the outside of the reactor when the reaction solution reaches a predetermined solution level, an extraction unit configured to extract a portion of the reaction solution when the size of a precursor particle in the reaction solution reaches a predetermined size, and a storage tank configured to receive a reaction solution extracted from the reactor through the extraction unit.

[FIG.1]

EP 3 984 631 A1

**Description**

**TECHNICAL FIELD**

The present invention relates to a method for separating a transition metal from a waste positive electrode material.

This application claims the benefit of Korean Patent Application No. 10-2019-0172016, filed on December 20, 2019, in the Korean Intellectual Property Office, the disclosure of which is incorporated herein in its entirety by reference.

**BACKGROUND ART**

As technology development and demand for mobile devices have increased, the demand for secondary batteries as an energy source has been rapidly increased. Among such secondary batteries, lithium secondary batteries having a high energy density and voltage, a long cycle life, and a low self-discharging rate have been commercialized and widely used.

As a positive electrode active material of a lithium secondary battery, a lithium composite transition metal oxide including two or more transition metals such as nickel, cobalt, manganese, aluminum, and the like is widely used.

The lithium composite transition metal oxide is manufactured by a method in which a precursor for positive electrode active material in the form of a hydroxide or an oxyhydroxide including a transition metal is mixed with a lithium raw material and then fired. Specifically, a positive electrode active material may be manufactured by a method in which a precursor for positive electrode active material is manufactured using a continuous stirred tank reactor(CSTR) and then fired with a lithium raw material, or in which a precursor for positive electrode active material is manufactured using a batch-type reactor and then fired with a lithium raw material. The continuous stirred tank reactor(CSTR) uses a method in which a precursor formed of particles is discharged while raw materials are being introduced and co-precipitated, and the batch-type reactor uses a method in which raw materials are introduced according to the volume of a reactor and reacted for a predetermined time, and then a precursor is discharged after the reaction.

When a precursor for positive electrode active material is manufactured using a continuous stirred tank reactor(CSTR), since a precursor is discharged while raw materials are being introduced and co-precipitated, the productivity of a precursor for positive electrode active material may increase. However, since the introduction of raw materials and the discharge of a product take place simultaneously and continuously, there may be deviations in the residence time and reaction time of precursor for positive electrode active materials, which are produced in a reactor, in the reactor. Accordingly, there is a problem in that the size and the particle size distribution of particles of a produced precursor for positive electrode active material are not uniform.

In addition, while a precursor for positive electrode active material manufactured using a batch-type reactor has uniform particle size and particle size distribution, the productivity thereof is inferior to that of a precursor for positive electrode active material manufactured using a continuous stirred tank reactor(CSTR).

**DISCLOSURE OF THE INVENTION**

**TECHNICAL PROBLEM**

In order to solve the above problems, an aspect of the present invention provides a manufacturing apparatus and a manufacturing method which are capable of manufacturing a precursor for positive electrode active material having excellent productivity and excellent quality properties.

Another aspect of the present invention provides a precursor for positive electrode active material manufactured through the manufacturing apparatus and the manufacturing method as described above.

**TECHNICAL SOLUTION**

According to an aspect of the present invention, there is provided a manufacturing apparatus of a precursor for positive electrode active material, wherein the manufacturing apparatus includes a reactor configured to receive a reaction solution and produce a precursor for positive electrode active material through a co-precipitation reaction of the reaction solution, a filtration unit disposed inside the reactor and configured to discharge a filtrate excluding solids in the reaction solution to the outside of the reactor when the reaction solution reaches a predetermined solution level, an extraction unit configured to extract a portion of the reaction solution when the size of a precursor particle in the reaction solution reaches a predetermined size, and a storage tank configured to receive a reaction solution extracted from the reactor through the extraction unit.

According to another aspect of the present invention, there is provided a manufacturing method of a precursor for positive electrode active material, wherein the method includes Step 1 of continuously supplying raw materials to a reactor provided with a filtration unit and an extraction unit and forming precursor for positive electrode active material particles through a co-precipitation reaction, Step 2 of discharging a filtrate excluding solids in a reaction solution through the filtration unit to maintain the solution level of the reaction solution constant when the reaction solution inside the reactor reaches a predetermined solution level, and Step 3 of extracting a portion of the reaction solution containing a precursor for positive electrode active material into a storage tank through the extraction unit to maintain the concentration of the solids in the reaction solution at a predetermined level or lower.

According to another aspect of the present invention, there is provided a precursor for positive electrode active material manufactured by the above manufacturing method and including a core portion in which primary particles are randomly aggregated, and a shell portion surrounding the core portion and formed of primary particles orientated in an outward direction from the particle center, wherein the ratio of the length of the shell portion to the diameter of the core portion is 1 or greater.

## ADVANTAGEOUS EFFECTS

The present invention manufactures a precursor for positive electrode active material while discharging a filtrate excluding solids in a reaction solution through a filtration unit of a reactor, and thus, may manufacture a precursor for positive electrode active material having a uniform particle size distribution and uniform quality while significantly increasing a production volume compared to a typical batch-type reactor.

However, when only the filtrate discharging is performed as described above, the content of precursor solids in the reactor gradually increases, and when the content of the solids increases to a predetermined level or higher, a reaction is terminated due to the motor load of a stirrer, or the stirring of a reactant is not facilitated, so that there may be a problem in that the quality uniformity of the precursor for positive electrode active material is degraded.

In addition, when only the filtrate discharging is performed, the residence time of particles in the reactor is limited due to the increase in solids, so that the particles may not sufficiently grow, and when the reaction time for seed formation is set to be short in order to ensure the sufficient growth of the particles, there may be a problem in that productivity is degraded.

Therefore, in the present invention, a process of extracting a portion of a reaction solution containing a precursor for positive electrode active material into a storage tank is performed when the particle size of the precursor for positive electrode active material reaches a predetermined level or higher, so that the solid content in a reactor is maintained at a predetermined level to further improve the quality and productivity of the precursor for positive electrode active material.

In addition, according to the present invention, the operation time of a reactor may be lengthened compared to the prior art, so that seed generation time may be set to be long in comparison with the prior art. Accordingly, it is possible to manufacture a precursor for positive electrode active material in which the size of a core portion is minimized. The precursor for positive electrode active material manufactured according to the present invention is formed in a structure having a small core portion in which primary particles are aggregated in an amorphous form and a large shell portion in which primary particles are arranged while having a specific orientation.

## BRIEF DESCRIPTION OF THE DRAWINGS

The following drawings attached to the specification illustrate preferred examples of the present invention by example, and serve to enable technical concepts of the present invention to be further understood together with detailed description of the invention given below, and therefore the present invention should not be interpreted only with matters in such drawings.

FIG. 1 is a view showing a precursor for positive electrode active material manufacturing apparatus according to the present invention;
FIG. 2 is a graph showing the particle size distribution of a precursor of each of Examples 1 and Comparative Examples 1 and 2 measured according to Experimental Example 2;
FIG. 3 is a SEM photograph of a precursor for positive electrode active material manufactured according to Example 1;
FIG. 4 is a SEM photograph of a precursor for positive electrode active material manufactured according to Comparative Example 2;
FIG. 5 is a SEM photograph of a positive electrode active material manufactured according to Example 1;
FIG. 6 is a SEM photograph of a positive electrode active material manufactured according to Comparative Example 2;
FIG. 7 is a SEM photograph of a precursor for positive electrode active material particle manufactured according to Example 1;
FIG. 8 is a SEM photograph of a precursor for positive electrode active material particle manufactured according to Comparative Example 1; and

FIG. 9 is a graph showing capacity measurement results of batteries to which positive electrode active materials of Example 1 and Comparative Examples 1 and 2 are respectively applied.

## BEST MODE FOR CARRYING OUT THE INVENTION

It will be understood that words or terms used in the specification and claims of the present invention shall not be construed as being limited to having the meaning defined in commonly used dictionaries. It will be further understood that the words or terms should be interpreted as having meanings that are consistent with their meanings in the context of the relevant art and the technical idea of the invention, based on the principle that an inventor may properly define the meaning of the words or terms to best explain the invention.

Hereinafter, the present invention will be described in more detail.

### Apparatus for manufacturing precursor for positive electrode active material

First, an apparatus for manufacturing a precursor for positive electrode active material according to the present invention will be described.

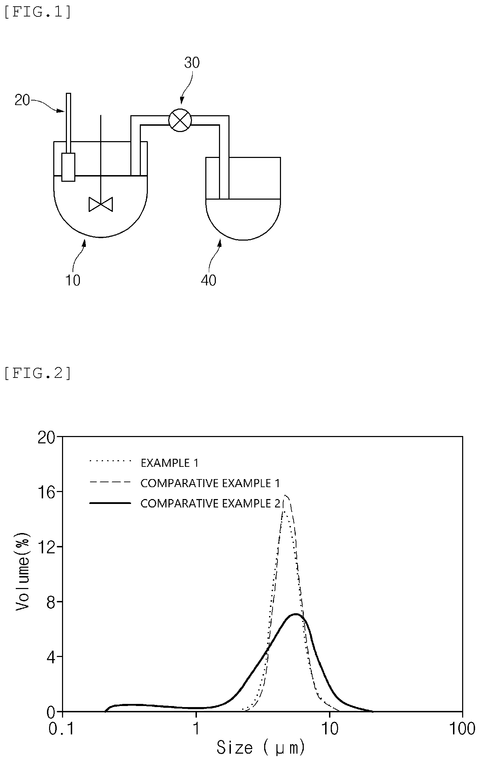

FIG. 1 discloses the apparatus for manufacturing a precursor for positive electrode active material according to the present invention. Hereinafter, referring to FIG. 1, the manufacturing apparatus of a precursor for positive electrode active material of the present invention will be described.

The manufacturing apparatus of a precursor for positive electrode active material according to the present invention includes a reactor 10, a filtration unit 20, an extraction unit 30, and a storage tank 40.

The reactor 10 is for forming a precursor for positive electrode active material through a co-precipitation reaction of a reaction solution, and includes a space for receiving the reaction solution formed by the introduction of raw materials. The reactor 10 may include one or more input parts (not shown) configured to continuously supply the raw materials. In addition, the reactor 10 includes a stirrer for stirring the reaction solution, and the like.

Meanwhile, in the manufacturing apparatus of the present invention, the reactor 10 includes the filtration unit 20 thereinside. When the reaction solution reaches a predetermined solution level by the supply of the raw materials, the filtration unit 20 discharges a filtrate excluding solids in the reaction solution to the outside of the reactor. Therefore, when the manufacturing apparatus of the present invention is used, raw materials may be continuously supplied while maintaining the reaction solution in the reactor at a predetermined solution level. Accordingly, compared to a case of using a batch-type reactor, the production volume of a precursor may be dramatically increased.

Meanwhile, the filtration unit 20 does not discharge solids, such as precursor particles formed in the reaction solution, but discharges only the filtrate, so that the residence time and reaction time of precursor for positive electrode active materials in the reactor may be maintained constant. Therefore, when the manufacturing apparatus of the present invention is used, unlike when a CSTR reactor is used, precursor particles are formed to have a uniform particle size and a uniform particle size distribution.

The filtration unit 20 may include, for example, a filter made of a metal material, and specifically, may include a metal filter made of stainless steel and/or carbon steel materials. When compared to a filter made of a polymer material such as a non-woven fabric, the filter of a metal material has a relatively high filtration flow rate per unit area, and thus, may discharge a large amount of filtrate to the outside of the reactor in a short period of time. Accordingly, the solution level of the reaction solution in the reactor may be easily adjusted.

In addition, the filtration unit 20 may include a pleated filter in a pleated form. The pleated filter has a large specific surface area, and thus, has a high filtration flow rate per area compared to a filter in a simple form having the same size, so that the solution level of the reaction solution in the reactor may be easily adjusted.

Meanwhile, although the solution level of the reaction solution may be adjusted to be constant by discharging the filtrate of the reaction solution using the filtration unit 20 as described above, precursor particles are not discharged in this case. Therefore, the concentration of the solids in the reaction solution increases as the reaction time elapses. When the content of the solids in the reaction solution increases, stirring is not facilitated. As a result, the raw materials are not uniformly mixed, which causes a problem in which the quality uniformity of active material precursors is degraded. Therefore, when using a reactor provided with only the filtration unit 20, the reaction has to be terminated when the content of the solids in the reaction solution reaches a predetermined level, for example, a level of 50 wt%, in order to lower a defect rate, and accordingly, the effect of increasing a production volume is limited.

In order to solve the above problems, the present inventors have repeatedly conducted research and found that when a portion of a reaction solution containing a precursor for positive electrode active material is extracted after a reaction for forming a precursor for positive electrode active material has progressed to a certain extent, the production volume thereof may be further increased without degrading the quality of the precursor for positive electrode active material, and have invented the manufacturing apparatus of the present invention provided with the extraction unit 30 and the storage tank 40.

The extraction unit 30 is for maintaining the content of the solids in the reaction solution at a predetermined level or lower, preferably 80 wt% or lower, and extracts a portion of the reaction solution inside the reactor 10 and transfers the portion to the storage tank 40.

The extraction unit 30 may include, for example, a pump.

Unlike the filtration unit 20 which discharges only the filtrate excluding solids, the extraction unit 30 extracts a reaction solution containing a precursor for positive electrode active material and transfers the same to the storage tank 40, and thus, may reduce the concentration of the solids in the reaction solution.

Meanwhile, it is preferable that the extraction unit 30 extracts a portion of the reaction solution when the particle diameter of the precursor for positive electrode active material in the reaction solution reaches a predetermined level. When extraction starts prematurely, precursor particles having a small particle size are transferred to the storage tank 40, so that the particle size distribution of a precursor finally produced may be widened. Specifically, it is preferable that the extraction starts when the particle diameter of the precursor for positive electrode active material in the reaction solution reaches the target minimum particle diameter of a precursor for positive electrode active material, that is, a precursor for positive electrode active material to be finally produced.

Next, the storage tank 40 is configured to receive a reaction solution extracted from the reactor by the extraction unit. The storage tank 40 may separate the precursor for positive electrode active material from the transferred reaction solution, followed by cleaning and drying to obtain the precursor for positive electrode active material, or may mix a reaction solution in the reactor 10 and a reaction solution in the storage tank 40 after the co-precipitation reaction is completed in the reactor 10, and then separate the precursor for positive electrode active material, followed by cleaning and drying to obtain the precursor for positive electrode active material.

**Method for manufacturing precursor for positive electrode active material**

Next, a method for manufacturing a precursor for positive electrode active material according to the present invention will be described.

The manufacturing method of a precursor for positive electrode active material according to the present invention includes (1) Step 1 of continuously supplying raw materials to a reactor provided with a filtration unit and an extraction unit and forming precursor for positive electrode active material particles through a co-precipitation reaction, (2) Step 2 of discharging a filtrate excluding solids in a reaction solution through the filtration unit to maintain the solution level of the reaction solution constant when the reaction solution inside the reactor reaches a predetermined solution level, and (3) Step 3 of extracting a portion of the reaction solution containing a precursor for positive electrode active material into a storage tank through the extraction unit to maintain the concentration of the solids in the reaction solution at a predetermined level or lower.

First, raw materials are continuously supplied to a reactor provided with a filtration unit and an extraction unit. The raw materials may be continuously supplied to the reactor though an input part provided to the reactor. The raw materials are mixed inside the reactor to form a reaction solution, and precursor for positive electrode active material particles are formed through a co-precipitation reaction of the reaction solution.

At this time, the filtration unit is disposed inside the reactor and is configured to discharge a filtrate excluding solids in the reaction solution to the outside of the reactor when the reaction solution reaches a predetermined solution level, and the extraction unit is configured to extract a portion of the reaction solution and transfer the portion to a storage tank to maintain the content of the solids in the reaction solution at a predetermined lever or lower. In addition, the reactor is where the reaction solution is received and the co-precipitation reaction is performed to produce a precursor for positive electrode active material. Detailed descriptions of the filtration unit, the extraction unit, and the reactor are the same as described above.

Meanwhile, the raw materials include a transition metal-containing solution, an ammonium ion-containing solution, and a basic aqueous solution.

A transition metal included in the transition metal-containing solution may be nickel, cobalt, $M^1$(wherein, $M^1$ is one or more selected from the group consisting of Mn and Al), and the like. Specifically, the transition metal-containing solution may include an acetate, a nitrate, a sulfate, a halide, a sulfide, a hydroxide, an oxide, an oxyhydroxide, or the like of transition metals, and is not particularly limited as long as it may be dissolved in water.

For example, the nickel (Ni) may be included in the transition metal-containing solution in the form of $Ni(OH)_2$, $NiO$, $NiOOH$, $NiCO_3 \cdot 2Ni(OH)_2 \cdot 4H_2O$, $NiC_2O_2 \cdot 2H_2O$, $Ni(NO_3)_2 \cdot 6H_2O$, $NiSO_4$, $NiSO_4 \cdot 6H_2O$, a fatty acid nickel salt, a nickel halide, or the like, and at least one thereof may be used.

In addition, the cobalt (Co) may be included in the transition metal-containing solution in the form of $Co(OH)_2$, $CoOOH$, $Co(OCOCH_3)_2 \cdot 4H_2O$, $Co(NO_3)_2 \cdot 6H_2O$, $CoSO_4 \cdot 7H_2O$, or the like, and at least one thereof may be used.

In addition, when the $M^1$ is manganese, the manganese(Mn) may be included in the transition metal-containing solution in the form of a manganese oxide such as $Mn_2O_3$, $MnO_2$, and $Mn_3O_4$, a manganese salt such as $MnCO_3$, $Mn(NO_3)_2$, $MnSO_4$, manganese acetate, dicarboxylic acid manganese salt, manganese citrate, and fatty acid manganese salt, oxyhydroxide, manganese chloride, or the like, and at least one thereof may be used.

Also, the transition metal-containing solution may further include another metal element ($M^2$) in addition to nickel, cobalt, and $M^1$. At this time, the metal element $M^2$ may include one or more selected from the group consisting of Zr, B, W, Mo, Cr, Nb, Mg, Hf, Ta, La, Ti, Sr, Ba, Ce, F, P, S, and Y.

When the transition metal-containing solution further includes the metal element ($M^2$), a raw material containing the metal element ($M^2$) may further be added when preparing the transition metal-containing solution.

As the raw material containing the metal element ($M^2$), at least one selected from the group consisting of an acetate, a nitrate, a sulfate, a halide, a sulfide, a hydroxide, an oxide, or an oxyhydroxide, all containing the metal element ($M^2$), may be used. For example, when the metal element ($M^2$) is W, a tungsten oxide or the like may be used.

The ammonium ion-containing solution may include at least one selected from the group consisting of $NH_4OH$, $(NH_4)_2SO_4$, $NH_4NO_3$, $NH_4Cl$, $CH_3COONH_4$, and $(NH_4)_2CO_3$. At this time, as a solvent, water, or a mixture of an organic solvent (for example, alcohol, etc.) which may be uniformly mixed with water and water may be used.

The basic aqueous solution may include at least one selected from the group consisting of NaOH, KOH, and $Ca(OH)_2$, and as a solvent, water, or a mixture of an organic solvent which may be uniformly mixed with water and water may be used.

Meanwhile, it is preferable that the raw materials are supplied in an amount such that the pH of the reaction solution is 12 or higher, preferably 12 to 13. In addition, for pH adjustment, a predetermined amount of the ammonium ion-containing solution and a predetermined amount of the basic aqueous solution may be first introduced before introducing the transition metal-containing solution to adjust the pH.

Depending on the pH of the reaction solution, aspects of a reaction for forming a precursor vary. Specifically, under the condition in which the pH is 12 or higher, a reaction for generating particle seeds mainly occurs, and under the condition in which the pH is lower than 12, a reaction for growing particle seeds mainly occurs. Therefore, at the beginning of a reaction, it is preferable that the pH of the reaction solution is maintained at 12 or higher for a predetermined period of time or more in order to allow a lot of particle seeds to be formed. In the present invention, the time during which the pH of the reaction solution is maintained at 12 or higher may be 3 hours or more, preferably about 3 hours to about 6 hours. When the time during which the pH of the reaction solution is maintained at 12 or higher is 3 hours or more, a core portion of a precursor for positive electrode active material is small and a shell portion thereof is long, so that it is possible to manufacture a precursor for positive electrode active material having excellent lithium mobility.

Meanwhile, after the generation of particle seeds is sufficiently achieved, the supply flow rate of the raw materials is adjusted such that the pH of the reaction solution is lower than 12, thereby allowing precursor particles to grow.

For example, the flow rate of the transition metal-containing solution, the ammonium ion-containing solution and/or the basic aqueous solution which are supplied to the reactor may be adjusted to adjust the pH of the reaction solution to be lower than 12, preferably 10 to 11.9, more preferably 10.5 to 11.7. When the transition metal-containing solution is introduced while the pH of the reaction solution is being adjusted to be in the above range, the reaction for generating seeds is terminated and the reaction for growing particle seeds begins.

Meanwhile, due to the supply of the raw materials in the above process, the solution level of the reaction solution inside the reactor gradually rises. When the reaction solution inside the reactor reaches a predetermined solution level, a co-precipitation reaction is performed while a filtrate excluding solids in the reaction solution is being discharged through the filtration unit to maintain the solution level of the reaction solution constant (Step 2).

At this time, the filtrate discharging may be continuously performed from when the solution level of the reaction solution reaches 70% to 100%, preferably 80% to 90% of a total capacity of the reactor. When the filtrate discharging begins too late, a precursor may get caught in pores of a filter for separating a precursor and a filtrate, or clogging may occur to lower a filtration flow rate, and when the filtration flow rate is lowered, the height of a reactant may increase to cause the reaction to be terminated. Therefore, it is necessary to properly adjust a filtration level in anticipation of the above.

In order to maintain the solution level of the reaction solution in the reactor, it is preferable that the discharge flow rate of a filtrate discharged through the filtration unit is the same as the total supply flow rate of the raw materials.

Meanwhile, as the co-precipitation reaction progresses, precursor particles are generated, and as a result, the solid content of the reaction solution gradually increases. When the content of the solids in the reaction solution is too high, it is difficult to stir, so that the mixing of the raw materials is not facilitated, and as a result, the co-precipitation reaction is not uniformly performed, so that the quality of a precursor for positive electrode active material may be poor. In order to prevent the above, it is necessary to terminate the reaction when the solid content is not too high. However, in this case, there is a problem in that the effect of increasing productivity is not significant.

However, in the present invention, the co-precipitation reaction is performed while maintaining the concentration of the solids in the reaction solution at a predetermined level or lower by extracting a portion of the reaction solution containing a precursor for positive electrode active material into a storage tank through the extraction unit (Step 3), so that problems caused by the increase in solid content may be solved.

Meanwhile, it is preferable that the extraction starts from when the particle diameter of the precursor for positive electrode active material in the reaction solution reaches the target minimum particle diameter of a precursor for positive electrode active material. It is because when the extraction starts from the above point of time, the particle size properties of a precursor for positive electrode active material finally obtained may not be impaired.

In addition, it is preferable that the extraction is performed in an amount such that the concentration of the solids in the reaction solution is maintained at 80 wt% or less, preferably 60 to 80 wt%. It is because when the concentration of the solids in the reaction solution is maintained at 80 wt% or less, stirring is facilitated, so that it is possible to minimize the chance of the quality of a precursor for positive electrode active material being poor.

Meanwhile, when precursor for positive electrode active material particles in the reaction solution grow to a desired size, the co-precipitation reaction is terminated and the precursor for positive electrode active material particles are separated from the reaction solution, cleaned, and then dried to obtain precursor for positive electrode active material powder. It is preferable that the termination point of time of the co-precipitation reaction is, for example, when the particle diameter of the precursor for positive electrode active material particles reaches the target maximum particle diameter of precursor for positive electrode active material particles.

The step of separating the precursor for positive electrode active material particles from the reaction solution may be performed, for example, using equipment such as a decompression filtration device, a filter press, and the like.

**Precursor for positive electrode active material**

Next, a precursor for positive electrode active material according to the present invention will be described.

The precursor for positive electrode active material according to the present invention is manufactured by the manufacturing method of the present invention described above, and is a precursor of a core-shell structure including a core portion, and a shell portion surrounding the core portion and formed of primary particles orientated in an outward direction from the particle center.

The core portion is formed at the time of particle seed generation, and has a form in which primary particles are randomly aggregated without a specific orientation.

The shell portion is formed at the time of particle growth, and has a form in which primary particles are arranged having a predetermined orientation. Specifically, the shell portion has a form in which primary particles are radially arranged in an outward direction from the precursor particle center.

Since the primary particles are randomly aggregated in the core portion, the movement path of lithium ions is not secured at the time of absorption and deintercalation of lithium ions, so that lithium mobility is low. On the other hand, since particles are radially arranged in the shell portion, the movement path of lithium is secured, so that lithium mobility is excellent. Therefore, when a region occupied by the core portion in a particle is large, lithium mobility is lowered, and when a region occupied by the shell portion is large, lithium mobility is improved.

A precursor for positive electrode active material particle manufactured according to the present invention has a ratio of the length of the shell portion to the diameter of the core portion of 1 or higher, preferably about 1 to about 1.5, and thus, a region occupied by the shell portion is large, so that lithium mobility is excellent.

Meanwhile, the precursor for positive electrode active material of the present invention may be, for example, represented by [Formula 1] or [Formula 2] below.

$$[\text{Formula 1}] \qquad [Ni_xCO_yM^1_zM^2_w](OH)_2$$

$$[\text{Formula 2}] \qquad [Ni_xCO_yM^1_zM^2_w]O \cdot OH$$

In Formula 1 and Formula 2 above, $M^1$ may be one or more selected from the group consisting of Mn and Al, and $M^2$ may be one or more selected from the group consisting of Zr, B, W, Mo, Cr, Nb, Mg, Hf, Ta, La, Ti, Sr, Ba, Ce, F, P, S, and Y.

x represents the atomic fraction of nickel among metal elements in the precursor, and the x may satisfy $0.5 \leq x < 1$, $0.6 \leq x \leq 0.98$, or $0.7 \leq x \leq 0.95$.

y represents the atomic fraction of cobalt among metal elements in the precursor, and the y may satisfy $0 < y \leq 0.5$, $0.01 \leq y \leq 0.4$, or $0.01 \leq y \leq 0.3$.

z represents the elemental fraction of a $M^1$ element among metal elements in the precursor, and the z may satisfy $0 < z \leq 0.5$, $0.01 \leq z \leq 0.4$, or $0.01 \leq z \leq 0.3$.

w represents the elemental fraction of a $M^2$ element among metal elements in the precursor, and the w may satisfy $0 \leq w \leq 0.1$, $0 \leq w \leq 0.05$, or $0 \leq w \leq 0.02$.

Meanwhile, the precursor for positive electrode active material manufactured according to the method of the present invention has excellent tap density and press density properties. When a positive electrode active material is manufactured using a precursor for positive electrode active material having a high tap density and a high press density, a positive electrode active material having a high tap density and a high press density may be manufactured. When the tap density and the press density of a positive electrode active material are high, it is possible to obtain an effect of increasing the energy density of an electrode.

Specifically, the tap density of the precursor for positive electrode active material according to the present invention may be 1.70 g/cc to 3.00 g/cc, preferably 1.80 g/cc to 3.00 g/cc, more preferably 1.85 g/cc to 3.00 g/cc, and the press density thereof may be 2.50 g/cc to 5.00 g/cc, preferably 2.50 g/cc to 4.50 g/cc, more preferably 2.55 g/cc to 4.50 g/cc.

In addition, the tap density of a positive electrode active material according to the present invention may be 1.80 g/cc to 3.50 g/cc, preferably 1.85 g/cc to 3.50 g/cc, more preferably 1.85 g/cc to 3.00 g/cc, and the press density thereof may be 2.55 g/cc to 5.00 g/cc, preferably 2.55 g/cc to 4.50 g/cc, more preferably 2.60 g/cc to 4.50 g/cc.

The above-described precursor for positive electrode active material according to the present may be mixed with a lithium-containing raw material, and then fired to manufacture a positive electrode active material.

The lithium-containing raw material may be, for example, one or more selected from the group consisting of lithium carbonate ($Li_2CO_3$), lithium hydroxide (LiOH), $LiNO_3$, $CH_3COOLi$, and $Li_2(COO)_2$, and preferably, may be lithium carbonate($Li_2CO_3$), lithium hydroxide(LiOH), or a combination thereof.

When manufacturing a positive electrode active material, the precursor for positive electrode active material and the lithium-containing raw material may be mixed at a molar ratio of 1:1 to 1:1.15. If the lithium-containing raw material is mixed in a range less than the above range, the capacity of a positive electrode active material to be manufactured may be degraded. If the lithium-containing raw material is mixed in a range greater than the above range, unreacted Li remains as a by-product, and the degradation in capacity and the separation of positive electrode active material particles(causing positive electrode active material aggregation) after firing may occur.

The firing may be performed at a temperature of 700°C to 1,000°C. When the firing temperature is lower than 700°C, the raw materials may remain in the particles due to an insufficient reaction, so that the high-temperature stability of a battery may be degraded, and the volume density and crystallinity may be degraded, so that the structural stability may be lowered. Meanwhile, when the firing temperature exceeds 1,000°C, non-uniform growth of particles may occur, and the disintegration of the particles may be difficult, so that there may be capacity degradation and the like. Meanwhile, when considering the particle size control, capacity, and stability of a positive electrode active material to be manufactured and the reduction in lithium-containing by-products, the firing temperature may be more preferably 700°C to 980°C.

The firing may be performed for 5 hours to 35 hours. When the firing time is less than 5 hours, the reaction time is too short to obtain a high-crystalline positive electrode active material. When greater than 35 hours, the size of particles may excessively increase and the productivity efficiency may be deteriorated.

## MODE FOR CARRYING OUT THE INVENTION

Hereinafter, embodiments of the present invention will be described in detail so that those skilled in the art may easily carry out the present invention. However, the present invention may be embodied in many different forms, and is not limited to the embodiments set forth herein.

**Example 1**

$NiSO_4$, $CoSO_4$, and $MnSO_4$ were dissolved in ion-exchange water in an amount such that the molar ratio of nickel:cobalt manganese was 0.8:0.1:0.1 to prepare a transition metal-containing solution having a concentration of 2.4 M.

20 L of deionized water was put into a reactor provided with a filter and a pump, and then nitrogen gas was purged in the reactor at a rate of 10 L/min to remove dissolved oxygen in the water. Thereafter, a NaOH aqueous solution and a $NH_4OH$ aqueous solution were added thereto, and then stirred at 50°C at a stirring speed of 600 rpm to maintain the pH inside the reactor at 12.3.

Thereafter, the transition metal-containing solution, the NaOH aqueous solution, and the $NH_4OH$ aqueous solution were added to the reactor at a rate of 3.8 L/hr, 2.3 L/hr, and 0.5 L/hr, respectively, and then stirred to perform a co-precipitation reaction for 6 hours so as to form a particle seed of a precursor for positive electrode active material. At this time, the pH of the reaction solution was maintained at 12.2.

When the reaction solution reached the full solution level during the co-precipitation reaction process, the filter was operated to continuously discharge a filtrate so as to maintain the solution level of the reaction solution constant.

Thereafter, the NaOH aqueous solution and the $NH_4OH$ aqueous solution were additionally introduced to adjust the pH of the reaction solution to be 11.6, and the co-precipitation reaction was additionally performed for 42 hours to allow precursor for positive electrode active material particles to grow.

When the particle diameter of the precursor for positive electrode active material particles formed in the reactor reached 4.0 pm during the additional co-precipitation reaction, the pump was operated to extract a reaction solution including the precursor for positive electrode active material particles into a storage tank at a rate of 1 L/hr until the end of the reaction so as to maintain the concentration of the solids in the reaction solution at 80% or less.

Thereafter, filtering was performed using a decompression filtration method in order to separate the formed precursor for positive electrode active material particles from the reaction solution. Thereafter, cleaning was performed with distilled water of 50°C or higher in order to remove impurities in a reactant, and then drying was performed in a 120°C drier for 24 hours to obtain a precursor for positive electrode active material whose composition equation is $Ni_{0.8}Co_{0.1}Mn_{0.1}(OH)_2$.

The precursor for positive electrode active material manufactured as described above and LiOH were mixed at a molar ratio of 1:1.05, and then fired for 30 hours at 750°C to manufacture a positive electrode active material whose composition equation is $Li[Ni_{0.8}Co_{0.1}Mn_{0.1}]O_2$.

**Comparative Example 1**

$NiSO_4$, $CoSO_4$, and $MnSO_4$ were dissolved in ion-exchange water in an amount such that the molar ratio of nickel:cobalt manganese was 0.8:0.1:0.1 to prepare a transition metal-containing solution having a concentration of 2.4 M.

20 L of deionized water was put into a reactor provided with a filter and a pump, and then nitrogen gas was purged in the reactor at a rate of 10 L/min to remove dissolved oxygen in the water. Thereafter, a NaOH aqueous solution and a $NH_4OH$ aqueous solution were added thereto, and then stirred at 50°C at a stirring speed of 600 rpm to maintain the pH inside the reactor at 12.3.

Thereafter, the transition metal-containing solution, the NaOH aqueous solution, and the $NH_4OH$ aqueous solution were added to the reactor at a rate of 3.8 L/hr, 2.3 L/hr, and 0.5 L/hr, respectively, and then stirred to perform a co-precipitation reaction for 1 hours so as to form a particle seed of a precursor for positive electrode active material. At this time, the pH of the reaction solution was maintained at 12.2.

When the reaction solution reached the full solution level during the co-precipitation reaction process, the filter was operated to continuously discharge a filtrate so as to maintain the solution level of the reaction solution constant.

Thereafter, the NaOH aqueous solution and the $NH_4OH$ aqueous solution were additionally introduced to adjust the pH of the reaction solution to be 11.6, and the co-precipitation reaction was additionally performed for 23 hours to allow precursor for positive electrode active material particles to grow.

Thereafter, the formed precursor for positive electrode active material particles were separated from the reaction solution, washed with water, and then dried in a 120°C drier for 24 hours to obtain a precursor for positive electrode active material whose composition equation is $Ni_{0.8}Co_{0.1}Mn_{0.1}(OH)_2$.

The precursor for positive electrode active material manufactured as described above and LiOH were mixed at a molar ratio of 1:1.05, and then fired for 30 hours at 750°C to manufacture a positive electrode active material whose composition equation is $Li[Ni_{0.8}Co_{0.1}Mn_{0.1}]O_2$.

**Comparative Example 2**

$NiSO_4$, $CoSO_4$, and $MnSO_4$ were dissolved in ion-exchange water in an amount such that the molar ratio of nickel:cobalt manganese was 0.8:0.1:0.1 to prepare a transition metal-containing solution having a concentration of 2.4 M.

20 L of deionized water was put into a CSTR reactor, and then nitrogen gas was purged in the reactor at a rate of 10 L/min to remove dissolved oxygen in the water. Thereafter, stirring was performed at 50°C at a stirring speed of 550 rpm.

Thereafter, the transition metal-containing solution, the NaOH aqueous solution, and the $NH_4OH$ aqueous solution were continuously introduced into the reactor at a rate of 3.8 L/hr, 2.3 L/hr, and 0.5 L/hr, respectively, and then stirred to perform a co-precipitation reaction so as to manufacture precursor for positive electrode active material particles. At this time, the pH of the reaction solution was maintained at 11.6, and the reaction solution was continuously discharged through a reactor discharge part from the beginning of the co-precipitation reaction.

From the discharged reaction solution, precursor for positive electrode active material particles were separated and washed with water, and then dried in a 120°C drier for 24 hours to obtain a precursor for positive electrode active material whose composition equation is $Ni_{0.8}Co_{0.1}Mn_{0.1}(OH)_2$.

The precursor for positive electrode active material manufactured as described above and LiOH were mixed at a molar ratio of 1:1.05, and then fired for 30 hours at 750°C to manufacture a positive electrode active material whose composition equation is $Li[Ni_{0.8}Co_{0.1}Mn_{0.1}]O_2$.

**Experimental Example 1**

The production volume of the precursor for positive electrode active material manufactured for one month in one reactor of the same volume through the method for manufacturing a precursor for positive electrode active material described in each of Example 1 and Comparative Example 1 was measured. The measurement results are shown in Table 1 below.

[Table 1]

|  | Production volume (ton/month) |
|---|---|
| Example 1 | 90 |
| Comparative Example 1 | 70 |

As shown in Table 1 above, according to the method of Example 1 in which a reaction solution filtrate discharge process and a reaction solution extraction process were performed, the production volume was increased by about 30% compared to the method of Comparative Example 1 in which the reaction solution extraction process was not performed.

**Experimental Example 2**

The physical properties of the precursor for positive electrode active material and the positive electrode active material manufactured in each of Example 1 and Comparative Examples 1 and 2 were measured by the following method.

(1) Tap density (unit: g/cc): 50 g of the precursor or the positive electrode active material was weighed and introduced into a dedicated container, and then tapped for 3000 times to measure the volume thereof. Thereafter, the weight was divided by the volume to calculate the tap density. As the measurement device, KYT-4000 of SEISHIN Co., Ltd was used. The measurement results are shown in Table 2 below.

(2) Press density (unit: g/cc): 3 g of the precursor or the positive electrode active material was introduced into a mold of a cylindrical shape, and pressed with a pressure of 2.5 ton. Thereafter, the height of the pressed mold was measured to measure the press density. The measurement results are shown in Table 2 below.

[Table 2]

|  |  | Example 1 | Comparative Example 1 | Comparative Example 2 |
|---|---|---|---|---|
| Tap density | Precursor | 1.89 | 1.81 | 1. 60 |
|  | Positive electrode active material | 1. 90 | 1.86 | 1.77 |
| Press density | Precursor | 2.58 | 2.54 | 2.45 |
|  | Positive electrode active material | 2.65 | 2.62 | 2.53 |

As shown in Table 2 above, the precursor for positive electrode active material and the positive electrode active material manufactured according to Example 1 had excellent tap density and press density compared to the precursor for positive electrode active material and the positive electrode active material manufactured according to each of Comparative Examples 1 and 2.

**Experimental Example 3: Battery properties evaluation**

The positive electrode active material manufactured according to each of Example 1 and Comparative Examples 1 and 2, a conductive material, and a PVDF binder were mixed with N-methyl-2-pyrrolidone(NMP) at a weight ratio of 96:2:2 to prepare a positive electrode slurry. The slurry was coated on an aluminum current collector using a doctor blade, dried, and then roll-pressed to manufacture a positive electrode. A polyethylene separator and a lithium metal negative electrode were stacked on the positive electrode to manufacture an electrode assembly, and an electrolyte solution was injected thereto to manufacture a coin battery. As the electrolyte solution, a solution prepared by dissolving $LiPF_6$ to a 1 M concentration in an organic solvent in which ethylene carbonate (EC) : ethyl methyl carbonate (EMC) : diethyl carbonate (DEC) were mixed in a volume ratio of 3 : 4 : 3 was used.

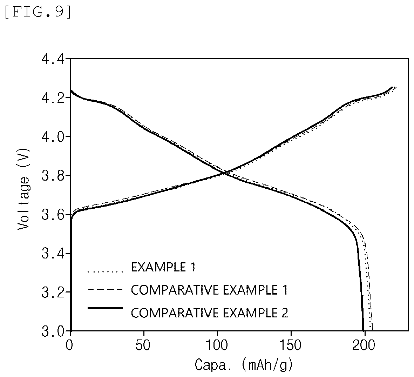

The coin battery manufactured as described above was charged at a constant current to 4.25 V with a 0.1 C rate current at 25°C, and charged at a constant voltage until the current reached 0.05 C while maintaining the voltage at 4.25 V. Thereafter, the coin battery was discharged with a 0.1 C constant current until the voltage reached 3.0 V, and the charge/discharge efficiency thereof according to Equation (1) below was measured. The measurement results are shown in [Table 3] below and FIG. 9.

$$Equation\ (1):\ Charge/discharge\ efficiency(\%)\ =\ \{Discharge\ capacity/Charge\ capacity\}\times100$$

[Table 3]

|  | Charge capacity (mAh/g) | Discharge capacity (mAh/g) | Charge/dischar ge efficiency (%) |
|---|---|---|---|
| Example 1 | 221.9 | 204.5 | 92.2 |
| Comparative Example 1 | 220.8 | 205.0 | 92.8 |
| Comparative Example 2 | 219.7 | 199.1 | 90.6 |

Through Table 3 above and FIG. 9, it can be confirmed that a secondary battery to which the positive electrode active material manufactured according to Example 1 is applied has excellent capacity properties compared to a secondary battery to which the positive electrode active material of Comparative Example 2 manufactured using a continuous stirred tank reactor(CSTR) is applied, and has an equivalent level of capacity properties to those of a secondary battery to which the positive electrode active material manufactured according to Comparative Example 1 is applied.

**Experimental Example 4**

The particle size distribution on a volume basis of precursor for positive electrode active material powder manufactured according to each of Example 1 and Comparative Examples 1 and 2 was measured using S-3500 of Microtrac Co., Ltd. The measurement results are shown in FIG. 2.

Through FIG. 2, it can be confirmed that the precursor for positive electrode active material powder manufactured according to each of Example 1 and Comparative Example 1 had a narrow particle size distribution, whereas the precursor for positive electrode active material powder manufactured according Comparative Example 2 had a wide particle size distribution. This means that the precursor for positive electrode active material particles of each of Example 1 and Comparative Example 1 have a relatively uniform particle size, whereas the precursor for positive electrode active material particles of Comparative Example 2 do not have a uniform particle size.

In addition, the precursor for positive electrode active material powder and positive electrode active material powder manufactured according to each of Example 1 and Comparative Example 2 were photographed with a scanning electron microscope to identify particle properties.

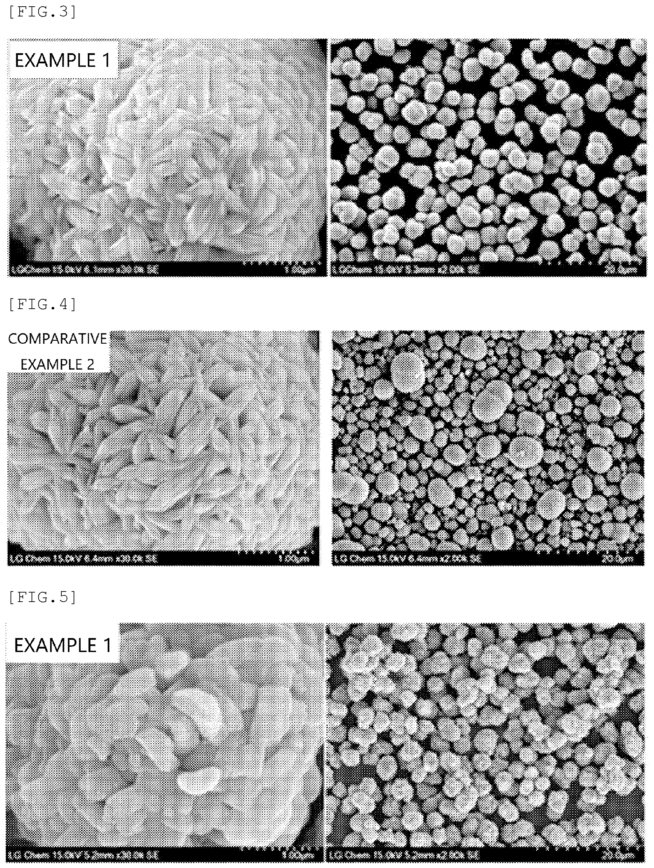

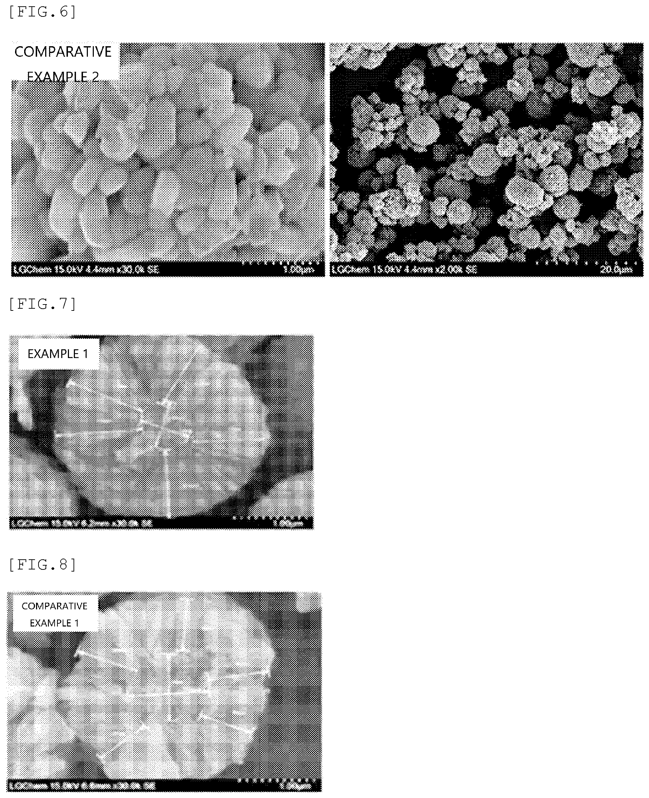

FIG. 3 is a SEM photograph of the precursor for positive electrode active material manufactured according to Example 1, and FIG. 4 is a SEM photograph of the precursor for positive electrode active material manufactured according to Comparative Example 2. FIG. 5 is a SEM photograph of the positive electrode active material manufactured according to Example 1, and FIG. 6 is a SEM photograph of the positive electrode active material manufactured according to Comparative Example 2.

As shown in FIG. 3 to FIG. 6, it was confirmed that the precursor and the positive electrode active material of Example 1 manufactured according to the method of the present invention had a relatively uniform particle size.

On the other hand, the precursor and the positive electrode active material of Comparative Example 2 manufactured using a continuous stirred tank reactor had particles having a large particle size and particles having a small particle size, so that it can be confirmed that the particle size and particle size distribution thereof are not uniform.

**Experimental Example 5**

A cross-section of the precursor for positive electrode active material manufactured in each of Example 1 and Comparative Example 1 was photographed with a scanning electron microscope to identify the size of a core portion and the size of a shell portion.

FIG. 7 illustrates a photograph of the cross-section of the precursor for positive electrode active material manufactured according to Example 1, and FIG. 8 illustrates a photograph of the cross-section of the precursor for positive electrode active material manufactured according to Comparative Example 1.

In addition, the diameter of the core portion and the length of the shell portion were measured through the SEM photographs, and are shown in Table 4 below.

[Table 4]

|  | Example 1 | Comparative Example 1 |
|---|---|---|
| Core portion diameter ($\mu$m) | 0.74 | 1.07 |
| Shell portion length ($\mu$m) | 1.06 | 0.80 |

As shown in FIGS. 7 and 8 and Table 4 above, in the case of the precursor for positive electrode active material manufactured according to Example 1 in which the pH of the reaction solution was maintained at 12 or higher for 3 hours or more, it can be confirmed that the diameter of the core part of the precursor was formed smaller than the length of the shell portion thereof. On the contrary, in the case of the precursor for positive electrode active material manufactured according to Comparative Example 2 in which the pH was maintained at 12 or higher for 1 hour, the diameter of the core portion of the precursor was formed larger that the length of the shell portion. In the core portion of the precursor for positive electrode active material, particles are aggregated without directionality, so that the mobility of lithium ions is lowered. On the contrary, in the shell portion, particles are arranged in an outward direction from the particle center while having orientation, so that the movement path of lithium ions is secured, making movement smooth. Therefore, when the shell portion having a high lithium ion mobility is formed large in a particle, the mobility of lithium ion is improved, so that it is possible to obtain an effect of improving output properties and capacity properties.

**Claims**

1. An apparatus for manufacturing a precursor for positive electrode active material, the apparatus comprising:

   a reactor configured to receive a reaction solution and produce a precursor for positive electrode active material through a co-precipitation reaction of the reaction solution;
   a filtration unit disposed inside the reactor and configured to discharge a filtrate excluding solids in the reaction solution to the outside of the reactor when the reaction solution reaches a predetermined solution level;
   an extraction unit configured to extract a portion of the reaction solution and transfer the portion to a storage tank to maintain the content of the solids in the reaction solution at a predetermined lever or lower; and
   a storage tank configured to receive a reaction solution extracted from the reactor through the extraction unit.

2. The apparatus of claim 1, wherein the reactor comprises one or more input parts configured to continuously supply raw materials.

3. The apparatus of claim 1, wherein the filtration unit comprises a filter made of a metal material.

4. The apparatus of claim 1, wherein the filtration unit comprises a pleated filter made of a metal material.

5. The apparatus of claim 1, wherein the extraction unit extracts a portion of the reaction solution containing a precursor for positive electrode active material when the particle diameter of the precursor for positive electrode active material in the reaction solution reaches a predetermined level.

6. The apparatus of claim 5, wherein the extraction unit starts extraction when the particle diameter of the precursor for positive electrode active material in the reaction solution reaches the target minimum particle diameter of a precursor for positive electrode active material.

7. The apparatus of claim 1, wherein the extraction unit comprises a pump.

8. A method for manufacturing a precursor for positive electrode active material, the method comprising:

   Step 1 of continuously supplying raw materials to a reactor provided with a filtration unit and an extraction unit and forming precursor for positive electrode active material particles through a co-precipitation reaction;
   Step 2 of discharging a filtrate excluding solids in a reaction solution through the filtration unit to maintain the solution level of the reaction solution constant when the reaction solution inside the reactor reaches a predetermined solution level; and

Step 3 of extracting a portion of the reaction solution containing a precursor for positive electrode active material into a storage tank through the extraction unit to maintain the concentration of the solids in the reaction solution at a predetermined level or lower.

9. The method of claim 8, wherein the raw materials comprise a transition metal-containing solution, an ammonium ion-containing solution, and a basic aqueous solution.

10. The method of claim 8, wherein in Step 1, the raw materials are supplied in an amount such that the pH of the reaction solution is 12 or higher.

11. The method of claim 10, wherein in Step 1 above, the pH of the reaction solution is maintained at 12 or higher for 3 hours or more.

12. The method of claim 10, wherein in Step 1 above, the pH of the reaction solution is maintained at 12 or higher for 3 hours to 6 hours.

13. The method of claim 8, wherein Step 1 above comprises a step of adjusting the supply flow rate of the raw materials such that the pH of the reaction solution is lower than 12.

14. The method of claim 8, wherein in Step 3 above, the extraction starts from when the particle diameter of the precursor for positive electrode active material in the reaction solution reaches the target minimum particle diameter of precursor for positive electrode active material.

15. The method of claim 8, wherein in Step 3 above, the concentration of the solids in the reaction solution is maintained at 80wt% or less.

16. A precursor for positive electrode active material manufactured by the manufacturing method according to any one of claims 8 to 15, and comprising:

a core portion in which primary particles are randomly aggregated; and

a shell portion surrounding the core portion and formed of primary particles orientated in an outward direction from the particle center,

wherein the ratio of the length of the shell portion to the diameter of the core portion is 1 or greater.

17. The precursor for positive electrode active material of claim 16, wherein the precursor for positive electrode active material is represented by [Formula 1] below, or [Formula 2] below:

[Formula 1] $[Ni_xCo_yM^1_zM^2_w](OH)_2$

[Formula 2] $[Ni_xCo_yM^1_zM^2_w]O \cdot OH$,

wherein in Formula 1 and Formula 2 above,

$0.5 \le x < 1$, $0 < y \le 0.5$, $0 < z \le 0.5$, and $0 \le w \le 0.1$,

$M^1$ is one or more selected from the group consisting of Mn and Al, and

$M^2$ is one or more selected from the group consisting of Zr, B, W, Mo, Cr, Nb, Mg, Hf, Ta, La, Ti, Sr, Ba, Ce, F, P, S, and Y.

[FIG.1]

[FIG.2]

[FIG.3]

EXAMPLE 1

[FIG.4]

COMPARATIVE
EXAMPLE 2

[FIG.5]

EXAMPLE 1

[FIG.6]

COMPARATIVE EXAMPLE 2

[FIG.7]

EXAMPLE 1

[FIG.8]

COMPARATIVE EXAMPLE 1

[FIG.9]

# EP 3 984 631 A1

<table>
<tr><td colspan="2">INTERNATIONAL SEARCH REPORT</td><td>International application No.</td></tr>
<tr><td colspan="2"></td><td>PCT/KR2020/018583</td></tr>
</table>

**A. CLASSIFICATION OF SUBJECT MATTER**

**B01J 19/18**(2006.01)i; **B01J 19/00**(2006.01)i; **C01G 53/00**(2006.01)i

According to International Patent Classification (IPC) or to both national classification and IPC

**B. FIELDS SEARCHED**

Minimum documentation searched (classification system followed by classification symbols)

B01J 19/18(2006.01); B01J 19/00(2006.01); H01M 10/052(2010.01); H01M 4/131(2010.01); H01M 4/134(2010.01); H01M 4/485(2010.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 배터리(battery), 전구체(precursor), 양극(cathode), 활물질(active material), 공침 (coprecipitation)

**C. DOCUMENTS CONSIDERED TO BE RELEVANT**

| Category* | Citation of document, with indication, where appropriate, of the relevant passages | Relevant to claim No. |
|---|---|---|
| Y | KR 10-2019-0083062 A (LG CHEM, LTD.) 11 July 2019 (2019-07-11)<br>See claims 1-16; paragraphs [0072]-[0106]; and figure 1. | 1-17 |
| Y | KR 10-2013-0070328 A (ENERGY MATERIAL TECHNOLOGY CO., LTD.) 27 June 2013 (2013-06-27)<br>See claims 1-2; paragraphs [0022]-[0027]; and figure 2. | 1-17 |
| Y | KR 10-2019-0057951 A (LG CHEM, LTD.) 29 May 2019 (2019-05-29)<br>See claims 1-12. | 16-17 |
| A | KR 10-2018-0130241 A (POSCO et al.) 07 December 2018 (2018-12-07)<br>See entire document. | 1-17 |
| A | US 2019-0341598 A1 (POSCO et al.) 07 November 2019 (2019-11-07)<br>See entire document. | 1-17 |

☐ Further documents are listed in the continuation of Box C.    ☑ See patent family annex.

| | |
|---|---|
| * Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **26 March 2021** | **26 March 2021** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2019)

**INTERNATIONAL SEARCH REPORT**
Information on patent family members

International application No.

**PCT/KR2020/018583**

| Patent document cited in search report | | | Publication date (day/month/year) | Patent family member(s) | | | Publication date (day/month/year) |
|---|---|---|---|---|---|---|---|
| KR | 10-2019-0083062 | A | 11 July 2019 | CN | 110248726 | A | 17 September 2019 |
| | | | | JP | 2020-512932 | A | 30 April 2020 |
| | | | | US | 10710048 | B2 | 14 July 2020 |
| | | | | US | 2020-0047147 | A1 | 13 February 2020 |
| | | | | WO | 2019-135540 | A1 | 11 July 2019 |
| KR | 10-2013-0070328 | A | 27 June 2013 | KR | 10-1355185 | B1 | 28 January 2014 |
| | | | | WO | 2013-094929 | A1 | 27 June 2013 |
| KR | 10-2019-0057951 | A | 29 May 2019 | CN | 111213267 | A | 29 May 2020 |
| | | | | EP | 3686971 | A1 | 29 July 2020 |
| | | | | EP | 3686971 | A4 | 09 December 2020 |
| | | | | JP | 2020-537315 | A | 17 December 2020 |
| | | | | US | 2020-0259173 | A1 | 13 August 2020 |
| | | | | WO | 2019-103363 | A1 | 31 May 2019 |
| KR | 10-2018-0130241 | A | 07 December 2018 | CN | 110678254 | A | 10 January 2020 |
| | | | | EP | 3632532 | A1 | 08 April 2020 |
| | | | | EP | 3632532 | A4 | 20 May 2020 |
| | | | | JP | 2020-522374 | A | 30 July 2020 |
| | | | | KR | 10-1967979 | B1 | 10 April 2019 |
| | | | | US | 2020-0078747 | A1 | 12 March 2020 |
| | | | | WO | 2018-221822 | A1 | 06 December 2018 |
| US | 2019-0341598 | A1 | 07 November 2019 | CN | 110178253 | A | 27 August 2019 |
| | | | | EP | 3561920 | A1 | 30 October 2019 |
| | | | | EP | 3561920 | A4 | 01 January 2020 |
| | | | | JP | 2020-514972 | A | 21 May 2020 |
| | | | | KR | 10-2018-0084727 | A | 25 July 2018 |
| | | | | KR | 10-2025190 | B1 | 25 September 2019 |
| | | | | WO | 2018-117506 | A1 | 28 June 2018 |

Form PCT/ISA/210 (patent family annex) (July 2019)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020190172016